# EUROPÄISCHE PATENTSCHRIFT

(11) **EP 0 847 889 B1**
(45) Veröffentlichungstag und Bekanntmachung des Hinweises auf die Patenterteilung: **14.08.2002**
(21) Anmeldenummer: 97120605.7
(22) Anmeldetag: 25.11.1997
(51) Int. Cl.: B60K 37/02

(54) **Anzeigeeinheit**
Display unit
Unité d'affichage

(30) Priorität: 14.12.1996 DE 19652139
(43) Veröffentlichungstag der Anmeldung: 17.06.1998
(73) Patentinhaber: Siemens Aktiengesellschaft, 80333 München (DE)
(72) Erfinder: Simon, Ernst-Ulrich, 61440 Oberursel/Ts. (DE)

(56) Entgegenhaltungen:
- WO-A-92/12872
- DE-A- 4 227 579
- DE-A- 19 505 564
- FR-A- 2 403 625
- GB-A- 2 032 363

## Beschreibung

Die Erfindung betrifft eine Anzeigeeinheit mit einem Gehäuse und mindestens einem in dem Gehäuse angeordneten Anzeigeelement, wobei das Gehäuse in eine Einsetzöffnung in einer Instrumententafel eines Fahrzeugs einsetzbar und in seiner Einbaulage verrastbar ist. Weiterhin betrifft die Erfindung ein Verfahren zur Herstellung einer solchen Anzeigeeinheit.

Anzeigeeinheiten mit einem derartigen Gehäuse sind bekannt. Sie zeichnen sich dadurch aus, daß eine vergleichsweise einfache Montage in eine Instrumententafel eines Fahrzeugs möglich ist.

Es ist z.B. eine Vorrichtung zum Befestigen eines Instrumentes an einem Armaturenbrett eines Kraftfahrzeugs bekannt, wobei in eine Ausnehmung in einem Armaturenbrett ein Instrument eingesetzt wird. Dieses Instrument ist von einem Gehäuse umgeben, an das frontseitig eine Blende integral angeformt ist. Die Blende besitzt Klauen und Vorsprünge, mit welchen das Instrument beim Einsetzen in das Armaturenbrett eingerastet wird.

Ferner sind Blenden an Instrumenten bekannt, welche Blenden ein Instrumentengehäuse zu einem Beobachter hin abschließen und mittels Klauen an diesem Gehäuse gehalten werden.

Diese aus dem Stand der Technik bekannten Anzeigeeinheiten mit einem Gehäuse vereinfachen zwar den Einbau der Anzeigeeinheiten in der Instrumententafel eines Fahrzeugs, sie geben jedoch keinen Hinweis, die Montage einer Anzeigeeinheit selbst zu erleichtern.

Um hier Abhilfe zu schaffen, ist es Aufgabe der vorliegenden Erfindung, eine Anzeigeeinheit mit einem Gehäuse der genannten Art so zu gestalten, daß ein einfacher und kostengünstiger Zusammenbau der Anzeigeeinheit gewährleistet ist. Dabei soll gleichzeitig die Montage automatisierbar sein und die Bauteilevielfalt verringert werden. Weiterhin soll ein Verfahren zur vereinfachten Herstellung einer solchen Anzeigeeinheit entwikkelt werden.

Die erstgenannte Aufgabe wird erfindungsgemäß dadurch gelöst, daß das Gehäuse eine eine Durchgangsöffnung bildende Stufenausnehmung aufweist, wobei eine Stufe größeren Querschnitts zu der einem Beobachter abgewandten Seite des Gehäuses hin gerichtet ist, daß in die Stufe größeren Querschnitts Anzeigenbauteile von der einem Beobachter abgewandten Seite des Gehäuses her derart einsetzbar sind, daß der Übergang von der Stufe größeren Querschnitts zu einer Stufe kleineren Querschnitts die Anzeigenbauteile axial abstützt, und daß die Anzeigenbauteile in ihrer Einbaulage im Gehäuse gemeinsam sicherbar sind.

Im Gegensatz zu bekannten Einrichtungen kann durch ein derart ausgebildetes Gehäuse einer Anzeigeeinheit die Fertigung erheblich vereinfacht und die Anzahl der notwendigen Verfahrensschritte verringert werden.

Von besonderem Vorteil ist es, wenn das Gehäuse in die Instrumententafel einschiebbar ist. Mit einer entsprechend tiefen Öffnung in der Instrumententafel wird nicht nur ein sicheres und verkantungsfreies Einschieben des Gehäuses erreicht, sondern auch eine Vergrößerung der Weite, auf welcher das Gehäuse in dem Fahrzeug abgestützt wird. Die so erzielte höhere Stabilität kann in eine Verringerung der Materialstärke der Instrumententafelbauteile umgesetzt werden. Darüber hinaus erleichtert die Vergrößerung der Stützweite den Festsitz des Gehäuses in der Instrumententafel. Durch diese konstruktive Gestaltung wird die Entstehung von (Vibrations-)Geräuschen im Bereich der Instrumententafel nachhaltig vermindert.

In einer bevorzugten Ausführungsform einer Anzeigeeinheit nach der Erfindung ist eines der Anzeigenbauteile eine Leiterplatte und eines eine Frontscheibe. Die Frontscheibe kann dabei auch gleichzeitig - neben einem schützenden Abschließen der Anzeigeeinheit - einer Signalisierungsund Darstellungsfunktion dienen, wenn sie farbig und/oder mit Symbolfeldern bedruckt ist.

Den Aufbau der Anzeigeeinheit weiter vereinfachend ist es, wenn das mindestens eine Anzeigeelement auf der Leiterplatte angeordnet ist. Damit ergibt sich eine höhere Stabilität der Gesamtanordnung und die Bauteilevielfalt wird weiter reduziert.

Insbesondere kann mindestens eines der Anzeigeelemente eine Flüssigkristallanzeige sein, so daß die Anzeigemöglichkeiten nahezu unbegrenzt und auf Seiten der Anzeigeeinheit lediglich von der Ansteuerung der Flüssigkristallanzeige abhängig sind. Besonders einfach ist es, wenn mindestens eines der Anzeigeelemente eine Lichtquelle, z.B. eine Glühlampe oder eine LED, ist. Zusammen mit Symbolen und/oder farbigen Flächen auf der Frontscheibe in Bereichen, die der Lichtquelle gegenüber liegen, ergeben sich so vielfältig einsetzbare Signalisierungsmöglichkeiten, vor allem dann, wenn eine farbiges Licht ausstrahlende Lichtquelle verwendet wird.

Die Montage einer erfindungsgemäßen Anzeigeeinheit kann weiter vereinfacht werden, wenn die Stufe größeren Querschnitts als Einschub- oder Einwurfschacht ausgebildet ist und die Anzeigenbauteile in das Gehäuse einschiebbar oder einwerfbar sind. Eine ansprechende optische Gestaltung kann vor allem dann geschaffen werden, wenn die Frontscheibe unmittelbar oder über einen zwischengeschalteten Dichtring an dem Übergang von der Stufe größeren Querschnitts zu der Stufe kleineren Querschnitts anliegt. Die Frontscheibe kann an diesem Stufenübergang lose anliegen oder - um die Anzeigeeinheit besser vor Staub und Feuchtigkeit zu schützen - mit diesem verklebt sein. Die gleiche Wirkung wird erreicht, wenn ein Dichtring dem Stufenübergang und der Frontscheibe zwischengeschaltet wird. Liegen die Anzeigenbauteile unverbunden aneinander, so erleichtert dieses die Fertigung der Gesamteinheit erheblich. Dazu trägt auch bei, wenn eine Rastvorrichtung die Anzeigenbauteile in ihrer Einbaulage in dem Gehäuse sichert.

Von besonderem Vorteil ist es, wenn das der dem Beobachter abgewandten Seite des Gehäuses nächstliegende Anzeigenbauteil die übrigen Anzeigenbauteile an dem Übergang von der Stufe größeren Querschnitts zu der Stufe kleineren Querschnitts in Anlage hält. Bei einer solchen Ausführungsform sind zusätzlich einzubauende Haltebauteile überflüssig. Stützt gleichzeitig das Gehäuse das der dem Beobachter abgewandten Seite des Gehäuses nächstliegende Anzeigenbauteil axial ab, so ist auch auf Seiten des Gehäuses eine einfache und eine direkte Krafteinleitung ermöglichende Verbindung realisiert.

Günstig ist es, wenn das der dem Beobachter abgewandten Seite des Gehäuses nächstliegende Anzeigenbauteil eine Rückwand ist und einen Abschluß und Schutz der Anzeigeeinheit gegen Feuchtigkeit und Verschmutzung darstellt. Wird dieser Schutz auf andere Art und Weise erreicht, so kann es auch vorteilhaft sein, die Rückwand durchbrochen, z.B. materialsparend in Form eines grobmaschigen Gitters, auszuführen.

Da das zumindest eine Anzeigeelement in der Regel einer elektrischen Ansteuerung und auch einer elektrischen Energieversorgung bedarf, ist vorteilhaft eines der Anzeigenbauteile eine elektrische Anschlußvorrichtung. Es ist von Vorteil, wenn die Anschlußvorrichtung mit der Leiterplatte verbunden ist. Eine Anordnung der Anschlußvorrichtung auf der Leiterplatte führt sowohl zu einer weiteren Verringerung der Bauteileanzahl der Anzeigeeinheit als auch zu einer, die Kontaktsicherheit erhöhenden Verringerung der herzustellenden elektrischen Verbindungen.

Die Vielseitigkeit der Einsetzbarkeit einer Anzeigeeinheit nach der Erfindung wird hingegen insbesondere dann erhöht, wenn die Anschlußvorrichtung ein separates Bauteil ist. Sie kann dabei vorteilhaft das der dem Beobachter abgewandten Seite des Gehäuses nächstliegende Anzeigenbauteil sein und damit gleichzeitig den rückwärtigen Abschluß der Anzeigeeinheit bilden.

Besonders einfach mit der elektrischen Einrichtung des Fahrzeugs verbunden werden kann die Anzeigeeinheit, wenn die Anschlußvorrichtung eine Buchse einer Steckerverbindung ist. Diese Buchse kann günstigerweise in axialer Richtung des Gehäuses angeordnet sein, so daß die aufzubringenden Steck- bzw. Abzieh-Kräfte bestmöglich in das Gehäuse eingeleitet werden können.

Wird das Gehäuse in seinem sich axial von dem Beobachter weg erstrekkenden Bereich mit mindestens einem Federarm versehen, so bieten sich besonders einfache Verbindungsmöglichkeiten sowohl des Gehäuses in der Instrumententafel als auch der Anzeigenbauteile mit dem Gehäuse.

Vorteilhaft weist dieser mindestens eine Federarm einer Ausnehmung auf. Diese Ausnehmung ist besonders dann günstig, wenn sie ein Element des der dem Beobachter abgewandten Seite des Gehäuses nächstliegenden Anzeigenbauteils aufnimmt. Auf diese Weise werden die Anzeigenbauteile sicher in dem Gehäuse gehalten, ohne daß eine aufwendig gestaltete und gegebenenfalls ebenso aufwendig herzustellende Verbindung eingesetzt wird. Ist die Ausnehmung so gestaltet, daß sie ein Element eines weiteren Anzeigenbauteils aufnimmt, so bietet es sich an, hierfür in vorteilhafter Weise die Leiterplatte und die Anschlußvorrichtung zu verwenden. Eine feste, die elektrischen Verbindungen wenig belastende Lage dieser beiden Bauteile zueinander ist damit sichergestellt und gleichzeitig können die an der Anschlußvorrichtung auftretenden Steck-Kräfte direkt in das Gehäuse eingeleitet werden.

Vorteilhaft weist der mindestens eine Federarm eine radial nach außen gerichtete Nocke auf, womit der Federarm besser zu greifen und radial zum Inneren des Gehäuses hin gedrückt werden kann, wodurch Ein- und Ausbau des Gehäuses weiter vereinfacht werden. Darüber hinaus greift die Nocke in Einbaulage vorzugsweise in eine entsprechende Ausnehmung der Instrumententafel ein. So kann der Federarm eine Doppelfunktion ausführen und einerseits die Anzeigenbauteile in dem Inneren des Gehäuses festhalten und andererseits das Gehäuse selbst in der Instrumententafel fixieren.

Eine Verbesserung der Halte- und Ausrichtungsfunktionen läßt sich erreichen, wenn die Nocke und/oder die Ausnehmung in axialer Richtung des Gehäuses mindestens eine Schräge aufweist und/oder die Ausnehmung der Instrumententafel an ihrer Eingriffskante in axialer Richtung der Einsetzöffnung eine Schräge aufweist und/oder das oder die in die Ausnehmung greifenden Elemente der Anzeigenbauteile in axialer Richtung des Gehäuses mindestens eine Schräge aufweisen. Mit Hilfe dieser Schräge oder Schrägen kann nicht nur eine einfachere Montage der Einzelteile erreicht werden, sondern auch eine zusätzliche Vorspannung der Anzeigenbauteile in dem Gehäuse sowie des Gehäuses selbst in der Instrumententafel in axialer Richtung erzeugt werden.

Um eine den jeweiligen Wünschen und Erfordernissen entsprechende axiale Einbaulage der Anzeigenbauteile zu erhalten, ist es von Vorteil, wenn mindestens eines der Anzeigenbauteile ein Abstandhalter ist. Besonders günstig ist es, wenn einer der Abstandhalter ein Lichtkasten zur Lichtführung des von einer Lichtquelle ausgesandten Lichts ist. Einzelbauteile sparend weist der Lichtkasten vorzugsweise einen oder mehrere voneinander getrennte Lichtschächte auf. Weisen der oder die Lichtschächte zudem eine konische Form auf, so wird die Lichtführung hierdurch erheblich verbessert, insbesondere dann, wenn die Lichtschachtoberfläche stark reflektierend, z.B. in weißer Farbe, ausgeführt ist. Eine noch höher integrierte Anzeigeeinheit kann man vorteilhafterweise dann erhalten, wenn der Lichtkasten mit der Leiterplatte ein einziges Bauteil bildend verbunden ist.

Ist vorzugsweise einer der Abstandhalter zwischen der elektrischen Anschlußvorrichtung und der Leiterplatte angeordnet, so wird nicht nur Raum geschaffen für zwischen diesen beiden Bauteilen anzuordnende elektrische Verbindungen, sondern es kann gleichzeitig ein sicheres Abstützen der elektrischen Anschlußvorrichtung auf der Leiterplatte gewährleistet werden. Dieses ist besonders deshalb wichtig, weil die beim Verbinden der elektrischen Anschlußvorrichtung mit dem elektrischen Leitungssystem des Fahrzeugs möglicherweise auftretenden hohen Steck-Kräfte nicht zu einer mechanischen Zerstörung eines anderen Anzeigenbauteils, z.B. sensibler Bereiche der Leiterplatte, führen dürfen. Besonders einfach ist die Ausgestaltung dann, wenn der Abstandhalter mit der elektrischen Anschlußvorrichtung ein einziges Bauteil bildend verbunden ist. Die an der Anschlußvorrichtung auftretenden Kräfte werden vorzugsweise direkt in das Gehäuse eingeleitet, und zwar dadurch, daß der Abstandhalter die Anschlußvorrichtung und die Leiterplatte nahe bei oder in der Wandung des Gehäuses gegeneinander abstützt. Damit scheidet eine mechanische Beeinträchtigung, die von dieser Ursache ausgeht, der weiteren Anzeigenbauteile aus. Besonders gut ist es in diesem Zusammenhang, wenn die Grundfläche der elektrischen Anschlußvorrichtung und der Leiterplatte im wesentlichen identisch ist, so daß die Anschlußvorrichtung über den gesamten, wenig sensiblen Randbereich der Leiterplatte abgestützt werden kann. In besonders einfacher Weise greift der Abstandhalter in die Ausnehmung des oder der Federarme ein, womit eine Krafteinleitung direkt in die Wandung des Gehäuses ermöglicht wird.

Die Montage und die Demontage der Anzeigeeinheit wird dann ausgesprochen erleichtert, wenn der oder die Federarme in radialer Richtung elastisch ist/sind. Das zu Instandhaltungszwecken möglicherweise notwendige Entnehmen des Gehäuses aus der Instrumententafel kann dadurch erheblich vereinfacht werden, daß das Gehäuse an seiner dem Beobachter zugewandten Seite einen oder mehrere verdeckt angeordnete Eingriffsräume aufweist. In diese Eingriffsräume kann z.B. ein länglicher Gegenstand wie ein Schraubendreher eingeführt und mit diesem das Gehäuse herausgehebelt werden. Auch bei dieser Tätigkeit erweist es sich als besonders vorteilhaft, wenn die Nocken der Federarme und/oder die Eingriffskante der Instrumententafel eine Schräge aufweisen und somit eine Beschädigung der Rastvorrichtung vermieden wird.

Die zweitgenannte Aufgabe, nämlich die Schaffung eines Verfahrens zur Herstellung einer erfindungsgemäßen Anzeigeeinheit, wird erfindungsgemäß dadurch gelöst, daß die Anzeigenbauteile nacheinander einzeln oder in Gruppen von der dem Beobachter abgewandten Seite des Gehäuses her in das Gehäuse gegen den Übergang von der Stufe größeren Querschnitts zu der Stufe kleineren Querschnitts eingeworfen werden, wobei sich die Anzeigenbauteile in ihrer Einbaulage gegeneinander und gegen den Übergang abstützen.

Dieses Verfahren bedarf vorteilhaft keiner manuellen Geschicklichkeit. Es ermöglicht in einfacher Weise einen hohen Automatisierungsgrad der Herstellung, wobei gleichzeitig sehr große Stückzahlen pro Zeiteinheit produziert werden können. Durch eine entsprechende Gestaltung des Steckerbereiches und/oder der Rückseite der Anzeigeeinheit kann bei automatischer Montage zugleich eine automatische Kontaktierung erfolgen.

Vorzugsweise wird das zuletzt eingeworfene Anzeigenbauteil mit dem Gehäuse verrastet. Die zusammenzufügenden Bauteile sind vorteilhaft so gestaltet, daß durch federnde/elastische Elemente ein Ausgleich von Fertigungstoleranzen sichergestellt ist. Durch den Verzicht auf jegliche Schraubvorgänge bei der Montage der Anzeigeeinheit wird sowohl eine höhere Taktgeschwindigkeit erzielt als auch aufwendig zu automatisierende Verfahrensschritte vermieden. Zudem führt der Entfall von Bauteilen wie Schrauben, Unterlegscheiben, etc. zu einer nennenswerten Gewichtsreduzierung der Anzeigeeinheit. Eine Gewichtsreduzierung bedeutet sowohl eine Verringerung der Kosten der eingesetzten Materialien als auch eine Einsparung von Betriebsstoffen beim späteren Betrieb eines mit einer erfindungsgemäßen Anzeigeeinheit ausgestatteten Fahrzeugs.

Die Erfindung kann sehr unterschiedlich ausgeführt werden. Sie wird im folgenden anhand von in den beigefügten Zeichnungen dargestellten Ausführungsbeispielen näher erläutert. Es zeigt:
- Figur 1: eine erfindungsgemäße Anzeigeeinheit in geschnittener Darstellung,
- Figur 2: eine erfindungsgemäße Anzeigeeinheit in einer zweiten Ausführungsform in geschnittener Darstellung,
- Figur 3: eine erfindungsgemäße Anzeigeeinheit in einer dritten Ausführungsform in geschnittener Darstellung.

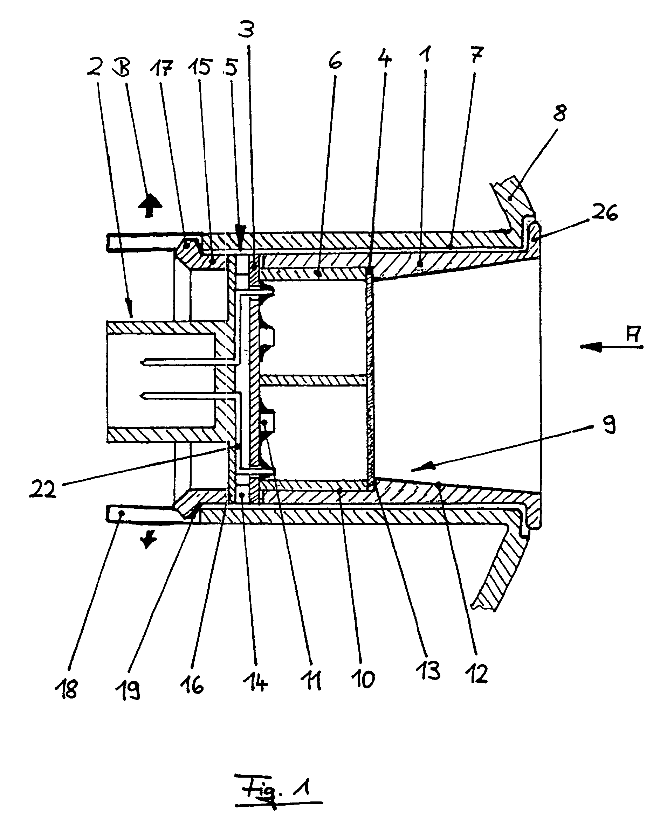

Figur 1 zeigt einen Ausschnitt einer Instrumententafel 8 eines Fahrzeugs, die z.B. aus Metall oder Kunststoff besteht und zum Fahrgast- bzw. Bedienerraum hin gepolstert sein kann, um das Verletzungsrisiko für Fahrzeuginsassen im Falle eines möglichen Aufpralls gering zu halten. Die Instrumententafel 8 weist einen tiefen Schacht 7, der von einem Beobachter aus gesehen in die Tafel hinein gerichtet ist, auf. Der tiefe Schacht 7 bietet eine große Stützweite für ein Gehäuse 1 einer Anzeigeeinheit. In diesem Ausführungsbeispiel weist das Gehäuse 1 ebenso wie der Schacht 7 parallele obere und untere Wände auf. Es ist aber auch denkbar, daß die oberen und unteren Wände des Gehäuses 1 und entsprechend diejenigen des Schachtes 7 in von dem Beobachter weg gerichteter Richtung konisch zueinander verlaufen und das Gehäuse 1 somit in seiner äußeren Form trichterförmig ausgebildet ist. Die Beobachtungsrichtung ist mit A bezeichnet.

Das Einschub- oder Einsetzgehäuse 1 besitzt eine Stufenausnehmung 9. Die Stufenausnehmung 9 ist derart gestaltet, daß zum Beobachter hin eine Stufe 12 kleineren Querschnitts angeordnet ist, die sich hier entgegen der. Beobachtungsrichtung A trichterförmig erweitert. Die Stufe 12 kleineren Querschnitts könnte aber genausogut parallele Seitenwände aufweisen. Ein Stufenübergang 13 verbindet die Stufe 12 kleineren Querschnitts in Beobachtungsrichtung A mit einer Stufe 10 größeren Querschnitts. Die Stufe 10 größeren Querschnitts ist mit parallelen oberen und unteren Wänden dargestellt, könnte aber auch entgegen der Beobachtungsrichtung A konisch zulaufend - ohne oder mit Abstufungen - ausgebildet sein. In diesem Fall müßten die noch zu beschreibenden, von der Stufe 10 aufgenommenen Anzeigenbauteile in ihren äußeren Konturen entsprechend angepaßt sein.

Zu den vorgenannten Anzeigenbauteilen zählt eine Frontscheibe 4, die direkt an den Stufenübergang 13 angelegt ist. Die Frontscheibe 4 kann in einzelnen Bereichen oder insgesamt eingefärbt oder farbig bedruckt sein und außerdem mit - hier nicht dargestellten - Anzeigesymbolen versehen sein. Z.B. kann mit einer schwarz eingefärbten Frontscheibe 4 ein oft gewünschter sog. Black-Panel-Effekt erzielt werden.

Ein weiteres Anzeigenbauteil ist eine Leiterplatte 3, die einseitig (zum Beobachter hin gerichtet) kaschiert und in Richtung des Beobachters mit Lichtquellen, die z.B. Miniatur-Glühlampen oder wie hier dargestellt LEDs 11 sein können, versehen. Mit Hilfe der LEDs 11 werden Anzeigebereiche auf der Frontscheibe 4 einzeln, gruppenweise oder insgesamt beleuchtet. Ein Abstandhalter 6, der als Lichtkasten ausgebildet ist und das Licht von den LEDs 11 zu den Anzeigebereichen auf der Frontscheibe 4 führt, befindet sich zwischen Leiterplatte 3 und Frontscheibe 4. Über Anschluß-Pins 22, die die Leiterplatte 3 entgegen der Beobachtungsrichtung A durchgreifen und auf der dem Beobachter zugewandten Seite der Leiterplatte 3 mit dieser kontaktiert sind, ist die Leiterplatte 3 bzw. die LEDs 11 mit einer elektrischen Anschlußvorrichtung 2 verbunden. In diesem Fall ist die Anschlußvorrichtung 2 eine Steckerbuchse zur Verbindung mit dem elektrischen Leitungssystem des Fahrzeugs. Sie könnte aber auch aus einem fest mit der Leiterplatte 3 verbundenen Kabelstrang, z.B. einem Flachbandkabel, welches Flachbandkabel seinerseits z.B. einen Stecker oder eine Steckerbuchse zur weiteren Verbindung aufweist, bestehen. Ein Abstandhalter 14 stützt die Anschlußvorrichtung 2 auf der Leiterplatte 3 ab und schafft zusätzlich einen Zwischenraum, in dem die Anschluß-Pins 22 - mechanisch unbelastet - verlaufen.

Die vom Beobachter abgewandte Seite des Gehäuses 1 ist mit Federarmen 15 versehen, die Bestandteil einer Rastvorrichtung 5 sind. Die Rastvorrichtung 5 dient dem Fixieren und Halten vorgenannter Anzeigenbauteile in dem Gehäuse 1. In dem gezeigten Beispiel nimmt eine Ausnehmung 16 in den Federarmen 15 die elektrische Anschlußvorrichtung 2, den Abstandhalter 14 sowie die Leiterplatte 3 auf. Die dem Beobachter entfernt liegende Rückfläche der Ausnehmungen 16 hält Anschlußvorrichtung 2, Abstandhalter 14, Leiterplatte 3, Lichtkasten 6 und Frontscheibe 4 zueinander in Anlage und stützt diese Bauteile gegen den Stufenübergang 13 an dem Gehäuse 1 ab.

Zusätzliche Rast-Nocken 17 in den Endbereichen der Federarme 15 sind in Ausnehmungen 18 der Instrumententafel 8 eingeklipst. Somit sind sowohl die Einzelbauteile der Anzeigeeinheit in dieser als auch die gesamte Anzeigeeinheit in der Instrumententafel nur durch Verrastungen gesichert. Ein aufwendiges Verschrauben, Vernieten oder andere Befestigungsverfahren entfallen damit. Zusätzlich erfüllen die Federarme 15 bei einer Ausführungsform nach dem Beispiel der Figur 1 eine Doppelfunktion, indem sie sowohl die Anzeigeeinheit in der Instrumententafel 8 als auch die Anzeigenbauteile in dem Gehäuse 1 der Anzeigeeinheit rastend sichern.

Das freie, mit den Ausnehmungen 18 versehene Ende der Einsetzöffnung 7 der Instrumententafel 8 ist in Grenzen elastisch, wodurch sich die Einsetzöffnung 7 in Richtung der Pfeile B erweitern läßt. Das Einsetzen und Einrasten der Anzeigeeinheit in die Instrumententafel wird damit erleichtert, insbesondere dann, wenn die Ausnehmungen 18 als Längsschlitze in der Instrumententafel ausgebildet und in größerer Anzahl vorhanden sind. Es muß dabei nicht für jede Ausnehmung 18 eine Rast-Nocke 17 an dem Gehäuse 1 vorgesehen sein.

Auch Schrägen 19 an den Nocken 17 dienen der Einsetzerleichterung. Gleichzeitig können die Schrägen 19 eine axiale Vorspannung des Gehäuses 1 in der Instrumententafel 8 erzeugen und damit zu einem eingespannten, festen Sitz der Anzeigeeinheit in der Einsetzöffnung 7 führen.

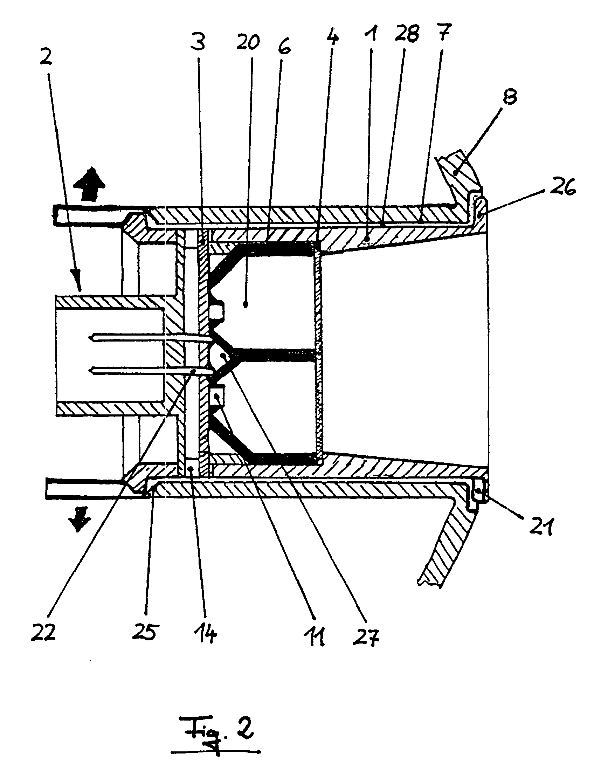

Demselben Zweck dient auch das Abschrägen einer Eingriffskante 25 der Einsetzöffnung 7 der Instrumententafel 8, wie sie in dem Ausführungsbeispiel der Figur 2 gezeigt ist. Bei dieser Ausführungsform ist das Gehäuse 1 in seinem vorderen Bereich, verdeckt von einer um den Gehäuserand umlaufenden Blende 26, mit einem oder mehreren Eingriffsräumen 21 versehen. In den Eingriffsraum 21 ist ein länglicher Gegenstand, z.B. ein Schraubendreher, einführbar. Mit einem solchen Werkzeug kann das Gehäuse 1 bei Bedarf (z.B. zur Instandhaltung) aus der Einsetzöffnung 7 der Instrumententafel 8 herausgezogen werden. Die um den Gehäuserand umlaufende Blende 26 verdeckt nicht nur den Eingriffsraum 21, sondern führt auch zu einer optisch ansprechenderen Gestaltung der Instrumententafel, da der zwischen Einsetzöffnung 7 und Gehäuse 1 notwendigerweise vorhandene Spalt 28 zugedeckt wird.

Der Lichtführung des Lichts der LEDs 11 in Richtung von Anzeigebereichen auf der Frontscheibe 4 dienende Lichtschächte 20 sind hier konisch ausgeführt. Dieses und eine reflektierende, z.B. weiße, Oberfläche der Lichtschächte 20 des Abstandhalters 6 führt zu einer Verbesserung der Lichtausbeute.

Die konische Gestaltung der Lichtschächte 20 schafft auf der Leiterplatte 3 zudem einen Freiraum 27, in den die Anschluß-Pins 22 der elektrischen Anschlußvorrichtung 2 hineingeführt werden. Der Abstandhalter 14, der ein separates Bauteil sein kann oder mit der Anschlußvorrichtung 2 oder der Leiterplatte 3 ein einziges Bauteil bildend verbunden ist, ist hier nicht dafür notwendig, einen Raum für das Abwinkeln der Pins 22 zu schaffen, da diese gerade durch die Leiterplatte 3 hindurchgeführt werden können.

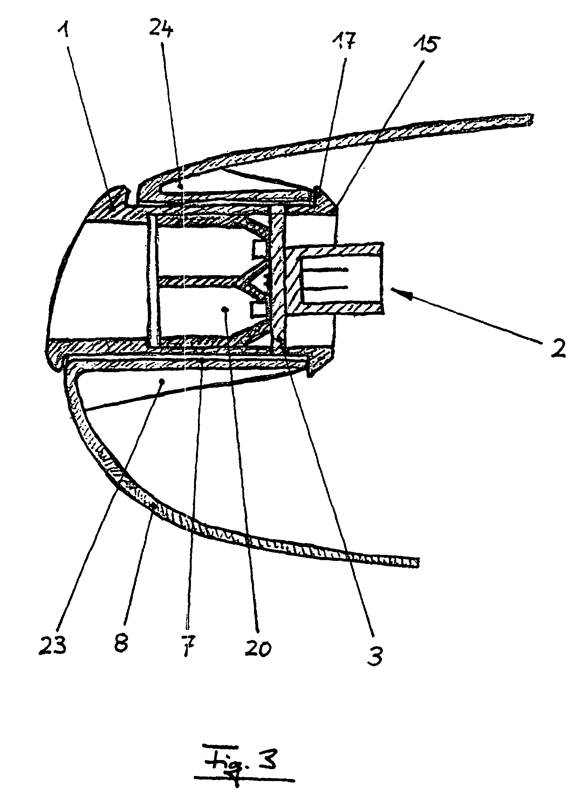

Zur axialen und radialen Stabilisierung der Einsetzöffnung 7 weist die in dem Ausführungsbeispiel der Figur 3 gezeigte Instrumententafel 8 zusätzliche Versteifungsrippen 23, 24 auf.

Diese Ausführungsform der Anzeigeeinheit ist ebenfalls mit konischen Lichtschächten 20 versehen. Die Leiterplatte 3 ist mit der auf sie aufgesetzten elektrischen Anschlußvorrichtung 2 starr verbunden. Die Einsetzöffnung 7 der Instrumententafel 8 ist nicht mit Ausnehmungen 18 (Figur 1) versehen. Vielmehr greifen die Rast-Nocken 17 der Federarme 15 des Gehäuses 1 direkt am freien Ende der Einsetzöffnung an. Die Rast-Nocken 17 sind in Beobachtungsrichtung zum Erleichtern des Einsetzen des Gehäuses 1 mit einer Schräge versehen, in der entgegengesetzten Richtung besitzen sie jedoch eine gegenüber dem Gehäuse 1 um 90° abgewinkelte Eingriffskante. Ein zerstörungsfreies Entnehmen des Gehäuses 1 aus der Instrumententafel 8 ist bei einer solchen Ausführungsform nicht möglich, da auch die Eingriffskante der Einsetzöffnung einen Winkel von 90° mit der Öffnungsinnenwandung bildet.

Auch weist diese Ausführungsform in besonders einfacher Weise keine rückseitige Abdeckung der Anzeigeeinheit auf, welche Abdeckung in den Ausführungsbeispielen nach den Fig. 1 und 2 in Form einer besonderen Gestaltung der Anschlußvorrichtung 2 vorliegt. Eine Ausführungsform ohne rückseitige Abdeckung kann dann verwendet werden, wenn der Schutz der Anzeigeeinheit vor Verschmutzung und Feuchtigkeit anderweitig sichergestellt ist.

Allen dargestellten Ausführungsbeispielen gemeinsam ist, daß die Anzeigenbauteile Frontscheibe 4, Lichtkasten 6, Leiterplatte 3, Abstandhalter 14 und Anschlußvorrichtung 2 geführt und verkantungsfrei in die Stufe 10 größeren Querschnitts des Gehäuses 1 einsetzbar und verklipsbar sind. Ein Ausrichten der Bauteile zueinander und zu dem Gehäuse 1 erfolgt aufgrund der angepaßten Stufenausnehmung 9 automatisch.

## Patentansprüche

1. Anzeigeeinheit mit einem Gehäuse (1) und mindestens einem in dem Gehäuse angeordneten Anzeigeelement, wobei das Gehäuse (1) in eine Einsetzöffnung (7) in einer Instrumententafel (8) eines Fahrzeugs einsetzbar und in seiner Einbaulage verrastbar (17,18) ist, **dadurch gekennzeichnet, daß** das Gehäuse (1) eine eine Durchgangsöffnung bildende Stufenausnehrnung (9) aufweist, wobei eine Stufe größeren Querschnitts (10) zu der einem Beobachter abgewandten Seite des Gehäuses hin gerichtet ist, daß in die Stufe größeren Querschnitts Anzeigenbauteile (2, 3, 4, 6) von der einem Beobachter abgewandten Seite des Gehäuses (1) her derart einsetzbar sind, daß der Übergang (13) von der Stufe größeren Querschnitts (10) zu einer Stufe kleineren Querschnitts (12) die Anzeigenbauteile (2, 3, 4, 6) axial abstützt, und daß die Anzeigenbauteile (2, 3, 4, 6) in ihrer Einbaulage im Gehäuse (1) gemeinsam sicherbar sind.

2. Anzeigeeinheit nach Anspruch 1, **dadurch gekennzeichnet, daß** das Gehäuse (1) in die Instrumententafel (8) einschiebbar ist.

3. Anzeigeeinheit nach einem der vorhergehenden Ansprüche, **dadurch gekennzeichnet, daß** eines der Anzeigenbauteile (2, 3, 4, 6) eine Leiterplatte (3) und eines eine Frontscheibe (4) ist.

4. Anzeigeeinheit nach Anspruch 3, **dadurch gekennzeichnet, daß** das mindestens eine Anzeigeelement auf der Leiterplatte (3) angeordnet ist.

5. Anzeigeeinheit nach einem der vorhergehenden Ansprüche, **dadurch gekennzeichnet, daß** mindestens eines der Anzeigeelemente eine Flüssigkristallanzeige ist.

6. Anzeigeeinheit nach einem der vorhergehenden Ansprüche, **dadurch gekennzeichnet, daß** mindestens eines der Anzeigeelemente eine Lichtquelle (LED 11) ist.

7. Anzeigeeinheit nach einem der vorhergehenden Ansprüche, **dadurch gekennzeichnet, daß** die Stufe größeren Querschnitts (10) als Einschub- oder Einwurfschacht ausgebildet ist und daß die Anzeigenbauteile (2, 3, 4, 6) in das Gehäuse (1) einschiebbar oder einwerfbar sind.

8. Anzeigeeinheit nach einem der Ansprüche 3 bis 7, **dadurch gekennzeichnet, daß** die Frontscheibe (4) unmittelbar oder über einen zwischengeschalteten Dichtring an dem Übergang (13) von der Stufe größeren Querschnitts (10) zu der Stufe kleineren Querschnitts (12) anliegt.

9. Anzeigeeinheit nach einem der vorhergehenden Ansprüche, **dadurch gekennzeichnet, daß** die Anzeigenbauteile (2, 3, 4, 6) unverbunden aneinanderliegen.

10. Anzeigeeinheit nach einem der vorhergehenden Ansprüche, **dadurch gekennzeichnet, daß** eine Rastvorrichtung (5) die Anzeigenbauteile (2, 3, 4, 6) in ihrer Einbaulage in dem Gehäuse (1) sichert.

11. Anzeigeeinheit nach einem der vorhergehenden Ansprüche, **dadurch gekennzeichnet, daß** das der dem Beobachter abgewandten Seite des Gehäuses (1) nächstliegende Anzeigenbauteil (2) die übrigen Anzeigenbauteile (3, 4, 6) an dem Übergang (13) von der Stufe größeren Querschnitts (10) zu der Stufe kleineren Querschnitts (12) in Anlage hält.

12. Anzeigeeinheit nach Anspruch 11, **dadurch gekennzeichnet, daß** das Gehäuse (1) das der dem Beobachter abgewandten Seite des Gehäuses (1) nächstliegende Anzeigenbauteil (2) axial abstützt.

13. Anzeigeeinheit nach einem der vorhergehenden Ansprüche, **dadurch gekennzeichnet, daß** das der dem Beobachter abgewandten Seite des Gehäuses (1) nächstliegende Anzeigenbauteil (2) eine Rückwand ist.

14. Anzeigeeinheit nach Anspruch 13, **dadurch gekennzeichnet, daß** die Rückwand durchbrochen ist.

15. Anzeigeeinheit nach einem der vorhergehenden Ansprüche, **dadurch gekennzeichnet, daß** eines der Anzeigenbauteile (2, 3, 4, 6) eine elektrische Anschlußvorrichtung (2) ist.

16. Anzeigeeinheit nach Anspruch 15, **dadurch gekennzeichnet, daß** die Anschlußvorrichtung (2) mit der Leiterplatte (3) verbunden ist.

17. Anzeigeeinheit nach Anspruch 16, **dadurch gekennzeichnet, daß** die Anschlußvorrichtung (2) auf der Leiterplatte (3) angeordnet ist.

18. Anzeigeeinheit nach Anspruch 15, **dadurch gekennzeichnet, daß** die Anschlußvorrichtung (2) ein separates Bauteil ist.

19. Anzeigeeinheit nach Anspruch 18, **dadurch gekennzeichnet, daß** die Anschlußvorrichtung (2) das der dem Beobachter abgewandten Seite des Gehäuses (1) nächstliegende Anzeigenbauteil ist.

20. Anzeigeeinheit nach einem der Ansprüche 15 bis 19, **dadurch gekennzeichnet, daß** die Anschlußvorrichtung (2) eine Buchse einer Steckerverbindung ist.

21. Anzeigeeinheit nach einem der vorhergehenden Ansprüche, **dadurch gekennzeichnet, daß** das Gehäuse (1) in seinem sich axial von dem Beobachter weg erstreckenden Bereich mit mindestens einem Federarm (15) versehen ist.

22. Anzeigeeinheit nach Anspruch 21, **dadurch gekennzeichnet, daß** der mindestens eine Federarm (15) eine Ausnehmung (16) aufweist.

23. Anzeigeeinheit nach Anspruch 22, **dadurch gekennzeichnet, daß** die Ausnehmung (16) ein Element des der dem Beobachter abgewandten Seite des Gehäuses (1) nächstliegenden Anzeigenbauteils (2) aufnimmt.

24. Anzeigeeinheit nach Anspruch 23, **dadurch gekennzeichnet, daß** die Ausnehmung (16) ein Element eines weiteren Anzeigenbauteils (3) aufnimmt.

25. Anzeigeeinheit nach einem der Ansprüche 21 bis 24, **dadurch gekennzeichnet, daß** der mindestens eine Federarm (15) eine radial nach außen gerichtete Nocke (17) aufweist.

26. Anzeigeeinheit nach Anspruch 25, **dadurch gekennzeichnet, daß** die Nocke (17) in Einbaulage in eine entsprechende Ausnehmung (18) der Instrumententafel (8) eingreift.

27. Anzeigeeinheit nach einem der Ansprüche 22 bis 26, **dadurch gekennzeichnet, daß** die Nocke (17) und/oder die Ausnehmung (16) in axialer Richtung des Gehäuses (1) mindestens eine Schräge (19) aufweist und/oder daß die Ausnehmung (18) der Instrumententafel an ihrer Eingriffskante (25) in axialer Richtung der Einsetzöffnung eine Schräge aufweist und/oder daß das oder die in die Ausnehmung (16) greifenden Elemente der Anzeigenbauteile (2, 3) in axialer Richtung des Gehäuses (1) mindestens eine Schräge aufweisen.

28. Anzeigeeinheit nach einem der vorhergehenden Ansprüche, **dadurch gekennzeichnet, daß** mindestens eines der Anzeigenbauteile ein Abstandhalter (6, 14) ist.

29. Anzeigeeinheit nach Anspruch 28, **dadurch gekennzeichnet, daß** einer der Abstandhalter ein Lichtkasten (6) ist.

30. Anzeigeeinheit nach Anspruch 29, **dadurch gekennzeichnet, daß** der Lichtkasten (6) einen oder mehrere voneinander getrennte Lichtschächte (20) aufweist.

31. Anzeigeeinheit nach Anspruch 30, **dadurch gekennzeichnet, daß** der oder die Lichtschächte (20) eine konische Form aufweisen.

32. Anzeigeeinheit nach Anspruch 29 bis 31, **dadurch gekennzeichnet, daß** der Lichtkasten (6) mit der Leiterplatte (3) ein einziges Bauteil bildend verbunden ist.

33. Anzeigeeinheit nach Anspruch 28, **dadurch gekennzeichnet, daß** einer der Abstandhalter (14) zwischen der elektrischen Anschlußvorrichtung (2) und der Leiterplatte (3) angeordnet ist.

34. Anzeigeeinheit nach Anspruch 33, **dadurch gekennzeichnet, daß** der Abstandhalter (14) mit der elektrischen Anschlußvorrichtung (2) ein einziges Bauteil bildend verbunden ist.

35. Anzeigeeinheit nach einem der Ansprüche 33 oder 34, **dadurch gekennzeichnet, daß** der Abstandhalter (14) die Anschlußvorrichtung (2) und die Leiterplatte (3) nahe bei oder in der Wandung des Gehäuses (1) gegeneinander abstützt.

36. Anzeigeeinheit nach Anspruch 35, **dadurch gekennzeichnet, daß** der Abstandhalter (14) in die Ausnehmung (16) des oder der Federarme (15) eingreift.

37. Anzeigeeinheit nach einem der Ansprüche 21 bis 36, **dadurch gekennzeichnet, daß** der oder die Federarme (15) in radialer Richtung elastisch ist/sind.

38. Anzeigeeinheit nach einem der vorhergehenden Ansprüche, **dadurch gekennzeichnet, daß** das Gehäuse (1) an seiner dem Beobachter zugewandten Seite einen oder mehrere verdeckt angeordnete Eingriffsräume (21) aufweist.

39. Verfahren zur Herstellung einer Anzeigeeinheit mit einem Gehäuse und mindestens einem in dem Gehäuse angeordneten Anzeigeelement, wobei das Gehäuse in eine Einsetzöffnung (7) in einer Instrumententafel (8) eines Fahrzeugs einsetzbar und in seiner Einbaulage verrastbar (17, 18) ist und das Gehäuse eine eine Durchgangsöffnung bildende Stufenausnehmung aufweist, wobei eine Stufe größeren Querschnitts zu der einem Beobachter abgewandten Seite des Gehäuses hin gerichtet ist und in die Stufe größeren Querschnitts Anzeigenbauteile von der einem Beobachter abgewandten Seite des Gehäuses her derart einsetzbar sind, daß der Übergang von der Stufe größeren Querschnitts zu einer Stufe kleineren Querschnitts die Anzeigenbauteile axial abstützt, wobei die Anzeigenbauteile in ihrer Einbaulage im Gehäuse gemeinsam sicherbar sind, und wobei die Anzeigenbauteile (2, 3, 4, 6) nacheinander einzeln oder in Gruppen von der dem Beobachter abgewandten Seite des Gehäuses (1) her in das Gehäuse (1) gegen den Übergang (13) von der Stufe größeren Querschnitts (10) zu der Stufe kleineren Querschnitts (12) eingeworfen werden, und sich die Anzeigenbauteile (2, 3, 4, 6) in ihrer Einbaulage gegeneinander und gegen den Übergang (13) abstützen.

40. Verfahren nach Anspruch 39, **dadurch gekennzeichnet, daß** das zuletzt eingeworfene Anzeigenbauteil (Anschlußvorrichtung 2) mit dem Gehäuse (1) verrastet wird.

## Claims

1. Display unit having a housing (1) and having at least one display element arranged in the housing, it being possible for the housing (1) to be inserted into an insertion opening (7) in a dashboard (8) of a vehicle and to be latched (17, 18) in its installed position, **characterized in that** the housing (1) has a stepped recess (9) forming a passage opening, a step of larger cross section (10) being directed towards that side of the housing which faces away from an observer, **in that** display components (2, 3, 4, 6) can be inserted into the step of larger cross section from that side of the housing (1) which faces away from an observer in such a manner that the transition (13) from the step of larger cross section (10) to a step of smaller cross section (12) supports the display components (2, 3, 4, 6) axially, and **in that** the display components (2, 3, 4, 6) can be secured together in their installed position in the housing (1).

2. Display unit according to Claim 1, **characterized in that** the housing (1) can be pushed into the dashboard (8).

3. Display unit according to one of the preceding claims, **characterized in that** one of the display components (2, 3, 4, 6) is a printed circuit board (3) and one is a front window (4).

4. Display unit according to Claim 3, **characterized in that** the at least one display element is arranged on the printed circuit board (3).

5. Display unit according to one of the preceding claims, **characterized in that** at least one of the display elements is a liquid crystal display.

6. Display unit according to one of the preceding claims, **characterized in that** at least one of the display elements is a light source (LED 11).

7. Display unit according to one of the preceding claims, **characterized in that** the step of larger cross section (10) is designed as a push-in or introduction shaft, and **in that** the display components (2, 3, 4, 6) can be pushed or introduced into the housing (1).

8. Display unit according to one of Claims 3 to 7, **characterized in that** the front window (4) bears directly or via an interconnected sealing ring against the transition (13) from the step of larger cross section (10) to the step of smaller cross section (12).

9. Display unit according to one of the preceding claims, **characterized in that** the display components (2, 3, 4, 6) bear unconnected against one another.

10. Display unit according to one of the preceding claims, **characterized in that** a latching device (5) secures the display components (2, 3, 4, 6) in their fitted position in the housing (1).

11. Display unit according to one of the preceding claims, **characterized in that** the display component (2) situated closest to that side of the housing (1) which faces away from the observer keeps the remaining display components (3, 4, 6) bearing against the transition (13) from the step of larger cross section (10) to the step of smaller cross section (12).

12. Display unit according to Claim 11, **characterized in that** the housing (1) axially supports the display component (2) situated closest to that side of the housing (1) which faces away from the observer.

13. Display unit according to one of the preceding claims, **characterized in that** the display component (2) situated closest to that side of the housing (1) which faces away from the observer is a back wall.

14. Display unit according to Claim 13, **characterized in that** the back wall is perforated.

15. Display unit according to one of the preceding claims, **characterized in that** one of the display components (2, 3, 4, 6) is an electrical connecting device (2).

16. Display unit according to Claim 15, **characterized in that** the connecting device (2) is connected to the printed circuit board (3).

17. Display unit according to Claim 16, **characterized in that** the connecting device (2) is arranged on the printed circuit board (3).

18. Display unit according to Claim 15, **characterized in that** the connecting device (2) is a separate component.

19. Display unit according to Claim 18, **characterized in that** the connecting device (2) is the display component which is situated closest to that side of the housing (1) which faces away from the observer.

20. Display unit according to one of Claims 15 to 19, **characterized in that** the connecting device (2) is a bushing of a plug-in connection.

21. Display unit according to one of the preceding claims, **characterized in that** the housing (1) is provided with at least one spring arm (15) in its region extending away axially from the observer.

22. Display unit according to Claim 21, **characterized in that** the at least one spring arm (15) has a recess (16).

23. Display unit according to Claim 22, **characterized in that** the recess (16) accommodates an element of the display component (2) situated closest to that side of the housing (1) which faces away from the observer.

24. Display unit according to Claim 23, **characterized in that** the recess (16) accommodates an element of a further display component (3).

25. Display unit according to one of Claims 21 to 24, **characterized in that** the at least one spring arm (15) has a projection (17) which is directed radially outwards.

26. Display unit according to Claim 25, **characterized in that**, in the fitted position, the projection (17) engages in a corresponding recess (18) of the dashboard (8).

27. Display unit according to one of Claims 22 to 26, **characterized in that** the projection (17) and/or the recess (16) has at least one bevel (19) in the axial direction of the housing (1), and/or **in that** the recess (18) of the dashboard has a bevel on its engagement edge (25), in the axial direction of the insertion opening, and/or **in that** that element or those elements of the display components (2, 3) which reach into the recess (16) have at least one bevel in the axial direction of the housing (1).

28. Display unit according to one of the preceding claims, **characterized in that** at least one of the display components is a spacer (6, 14).

29. Display unit according to Claim 28, **characterized in that** one of the spacers is a light box (6).

30. Display unit according to Claim 29, **characterized in that** the light box (6) has one or more light shafts (20) separated from one another.

31. Display unit according to Claim 30, **characterized in that** the light shaft or light shafts (20) have a conical shape.

32. Display unit according to Claim 29 to 31, **characterized in that** the light box (6) is connected to the printed circuit board (3), forming a single component.

33. Display unit according to Claim 28, **characterized in that** one of the spacers (14) is arranged between the electrical connecting device (2) and the printed circuit board (3).

34. Display unit according to Claim 33, **characterized in that** the spacer (14) is connected to the electrical connecting device (2), forming a single component.

35. Display unit according to one of Claims 33 or 34, **characterized in that** the spacer (14) supports the connecting device (2) and the printed circuit board (3) against each other in the vicinity of or in the wall of the housing (1).

36. Display unit according to Claim 35, **characterized in that** the spacer (14) engages in the recess (16) of the spring arm or spring arms (15).

37. Display unit according to one of Claims 21 to 36, **characterized in that** the spring arm or the spring arms (15) is/are elastic in the radial direction.

38. Display unit according to one of the preceding claims, **characterized in that** the housing (1) has one or more engagement spaces (21) arranged in a concealed manner on its side facing the observer.

39. Method for producing a display unit having a housing and at least one display element arranged in the housing, it being possible for the housing to be inserted into an insertion opening (7) in a dashboard (8) of a vehicle and to be latched (17, 18) in its installed position, the housing having a stepped recess forming a passage opening, a step of larger cross section being directed towards that side of the housing which faces away from an observer, and it being possible for display components to be inserted into the step of larger cross section from that side of the housing which faces away from an observer in such a manner that the transition from the step of larger cross section to a step of smaller cross section supports the display components axially, it being possible for the display components to be secured together in their installed position in the housing, and the display components (2, 3, 4, 6) being introduced one after another individually or in groups into the housing (1) against the transition (13) from the step of larger cross section (10) to the step of smaller cross section (12) from that side of the housing (1) which faces away from the observer, and, in their installed position, the display components (2, 3, 4, 6) being supported against one another and against the transition (13).

40. Method according to Claim 39, **characterized in that** the display component introduced last (connecting device 2) is latched to the housing (1).

## Revendications

1. Unité d'affichage, comportant un boîtier (1) et au moins un élément indicateur disposé dans le boîtier, le boîtier (1) pouvant être installé dans une ouverture d'insertion (7) dans un tableau de bord (8) d'un véhicule automobile et pouvant, être encliqueté (17, 18) dans sa position de montage,,
**caractérisée en ce que**
le boîtier (1) présente un évidement à gradins (9) formant une ouverture de passage, un gradin de plus grande section (10) étant dirigé vers la face du boîtier opposée à l'observateur, **en ce que** des composants d'affichage (2, 3, 4, 6) peuvent être installés dans le gradin de plus grande section, depuis la face du boîtier (1) opposée à un observateur, de telle façon que la zone de transition (13) entre le gradin à grande section (10) et un gradin de section plus petite (12) donne appui aux composants d'affichage (2, 3, 4, 6) axialement, et **en ce que** les composants d'affichage (2, 3, 4, 6) peuvent être immobilisés ensemble dans leur emplacement de montage dans le boîtier (1).

2. Unité d'affichage suivant la revendication 1, **caractérisée en ce que** le boîtier (1) peut être enfiché dans le tableau de bord (8).

3. Unité d'affichage suivant l'une des revendications précédentes, **caractérisée en ce que** l'un des composants d'affichage (2, 3, 4, 6) est une carte de circuit imprimé (3) et qu'un autre est une platine avant (4).

4. Unité d'affichage suivant la revendication 3, **caractérisée en ce qu'**au moins l'un des éléments d'affichage est disposé sur la carte de circuit imprimé (3).

5. Unité d'affichage suivant l'une des revendications précédentes, **caractérisée en ce qu'**au moins l'un des éléments d'affichage est un affichage à cristaux liquides.

6. Unité d'affichage suivant l'une des revendications précédentes, **caractérisée en ce qu'**au moins l'un des éléments d'affichage est une source de lumière (LED 11).

7. Unité d'affichage suivant l'une des revendications précédentes, **caractérisée en ce que** le gradin de grande section (10) est réalisé sous forme d'un passage d'enfichage ou d'insertion et **en ce que** les composants d'affichage (2, 3, 4, 6) peuvent être enfichés ou insérés dans le boîtier (1).

8. Unité d'affichage suivant l'une des revendications 3 à 7, **caractérisée en ce que** la platine avant (4) est disposée, directement ou par l'intermédiaire d'une bague d'étanchéité intermédiaire, contre la zone de transition (13) entre le gradin de section plus grande (10) et le gradin de section plus petite (12).

9. Unité d'affichage suivant l'une des revendications précédentes, **caractérisée en ce que** les composants d'affichage (2, 3, 4, 6) sont placés les uns contre les autres sans être reliés.

10. Unité d'affichage suivant l'une des revendications précédentes, **caractérisée en ce qu'**un dispositif d'encliquetage (5) immobilise les composants d'affichage (2, 3, 4, 6) dans leur position de montage dans le boîtier (1).

11. Unité d'affichage suivant l'une des revendications précédentes, **caractérisée en ce que** le composant d'affichage (2) le plus proche de la face du boîtier (1) opposée à l'observateur maintient en position les autres composants d'affichage (3, 4, 6) contre la zone de transition (13) entre le gradin de plus grande section (10) et le gradin de section plus petite (12).

12. Unité d'affichage suivant la revendication 11, **caractérisée en ce que** le boîtier (1) donne appui axialement au composant d'affichage (2) le plus proche de la face du boîtier (1) opposée à l'observateur.

13. Unité d'affichage suivant l'une des revendications précédentes, **caractérisée en ce que** la face du boîtier (1) opposée à l'observateur est une platine arrière.

14. Unité d'affichage suivant la revendication 13, **caractérisée en ce que** la platine arrière est percée d'ouvertures.

15. Unité d'affichage suivant l'une des revendications précédentes, **caractérisée en ce que** l'un des composants d'affichage (2, 3, 4, 6) est un dispositif de raccordement électrique (2).

16. Unité d'affichage suivant la revendication 15, **caractérisée en ce que** le dispositif de raccordement (2) est relié à la carte de circuit imprimé (3).

17. Unité d'affichage suivant la revendication 16, **caractérisée en ce que** le dispositif de raccordement (2) est disposé sur la carte de circuit imprimé (3).

18. Unité d'affichage suivant la revendication 15, **caractérisée en ce que** le dispositif de raccordement (2) est un composant séparé.

19. Unité d'affichage suivant la revendication 18, **caractérisée en ce que** le dispositif de raccordement (2) est le composant le plus proche de la face du boîtier (1) opposée à l'observateur.

20. Unité d'affichage suivant l'une des revendications 15 à 19, **caractérisée en ce que** le dispositif de raccordement (2) est une douille d'une liaison par enfichage.

21. Unité d'affichage suivant l'une des revendications précédentes, **caractérisée en ce que** le boîtier (1), dans sa zone s'étendant axialement en s'éloignant de l'observateur, est muni d'au moins un bras formant ressort (15).

22. Unité d'affichage suivant la revendication 21, **caractérisée en ce que** le bras formant ressort (15), au moins au nombre de un, présente un évidement (16).

23. Unité d'affichage suivant la revendication 22, **caractérisée en ce que** l'évidement (16) reçoit un élément du composant d'affichage (2) le plus proche de la face du boîtier (1) opposée à l'observateur.

24. Unité d'affichage suivant la revendication 23, **caractérisée en ce que** l'évidement (16) reçoit un élément d'un autre composant d'affichage (3).

25. Unité d'affichage suivant l'une des revendications 21 à 24, **caractérisée en ce que** le bras formant ressort (15), au moins au nombre de un, présente un bossage (17) dirigé radialement vers l'extérieur.

26. Unité d'affichage suivant la revendication 25, **caractérisée en ce que** le bossage (17) s'enclenche, en position de montage, dans un évidement correspondant (18) du tableau de bord (8).

27. Unité d'affichage suivant l'une des revendications 22 à 26, **caractérisée en ce que** le bossage (17) et/ou l'évidement (16) présente, dans la direction axiale du boîtier (1), au moins un chanfrein (19), et/ou **en ce que** l'évidement (18) du tableau de bord (8) présente sur son arête d'enclenchement (25), dans la direction axiale de l'ouverture d'insertion, un chanfrein, et/ou **en ce que** le ou les éléments des composants d'affichage (2, 3, 4, 6) faisant prise dans l'évidement (16) présentent, dans la direction axiale du boîtier (1), au moins un chanfrein.

28. Unité d'affichage suivant l'une des revendications précédentes, **caractérisée en ce qu'**au moins l'un des composants d'affichage est une entretoise (6, 14).

29. Unité d'affichage suivant la revendication 28, **caractérisée en ce que** l'une des entretoises est une boîte lumineuse (6).

30. Unité d'affichage suivant la revendication 29, **caractérisée en ce que** la boîte lumineuse (6) présente une ou plusieurs puits de lumière (20).

31. Unité d'affichage suivant la revendication 30, **caractérisée en ce que** le ou les puits de lumière (20) ont une forme conique.

32. Unité d'affichage suivant la revendication 29 à 31, **caractérisée en ce que** la boîte lumineuse (6) est reliée à la carte de circuit imprimé (3) en formant un seul composant.

33. Unité d'affichage suivant la revendication 28, **caractérisée en ce que** l'entretoise (14) est disposée entre le dispositif de raccordement électrique (2) et la carte de circuit imprimé (3).

34. Unité d'affichage suivant la revendication 33, **caractérisée en ce que** l'entretoise (14) est reliée au dispositif de raccordement électrique (2) en formant un seul composant.

35. Unité d'affichage suivant l'une des revendications 33 ou 34, **caractérisée en ce que** l'entretoise (14) appuie l'un contre l'autre le dispositif de raccordement (2) et la carte de circuit imprimé (3) au voisinage ou dans la paroi du boîtier (1).

36. Unité d'affichage suivant la revendication 35, **caractérisée en ce que** l'entretoise (14) fait prise dans l'évidement (16) du ou des bras formant ressorts (15).

37. Unité d'affichage suivant l'une des revendications 21 à 36, **caractérisée en ce que** le ou les bras formant ressorts (15) est ou sont élastiques dans la direction radiale.

38. Unité d'affichage suivant l'une des revendications précédentes, **caractérisée en ce que** le boîtier (1) présente, sur sa face tournée vers l'observateur, un ou plusieurs espaces d'enclenchement (21) disposés de façon à être recouverts.

39. Procédé de fabrication d'une unité d'affichage, comportant un boîtier (1) et au moins un élément indicateur disposé dans le boîtier, le boîtier pouvant être installé dans une ouverture d'insertion (7) dans un tableau de bord (8) d'un véhicule automobile et pouvant être encliqueté (17, 18) dans sa position de montage, et le boîtier présentant un évidement à gradins formant une ouverture traversante, un gradin de grande section étant dirigé vers la face du boîtier opposée à l'observateur, et des composants d'affichage pouvant être insérés dans le gradin de plus grande section depuis la face du boîtier opposée à l'observateur, de telle façon que la zone de transition entre le gradin de plus grande section et un gradin de section plus petite donne appui axialement aux composants d'affichage, les composants d'affichage pouvant être immobilisés ensemble dans le boîtier, dans leur position de montage, et les composants d'affichage (2, 3, 4, 6) étant insérés dans le boîtier (1), les uns après les autres, individuellement ou en groupes, depuis la face du boîtier (1) opposée à l'observateur, contre la zone de transition (13) entre le gradin de plus grande section (10) et le gradin de section plus petite (12), et s'appuyant, dans leur position de montage, les uns contre les autres et contre la zone de transition (13).

40. Procédé suivant la revendications 39, **caractérisé en ce que** le composant d'affichage introduit en dernier (dispositif de raccordement 2) est encliqueté avec le boîtier (1).
